# EUROPEAN PATENT APPLICATION

(11) **EP 3 690 782 A1**
(43) Date of publication of application: **05.08.2020**
(21) Application number: 19000061.2
(22) Date of filing: 01.02.2019
(51) Int. Cl.: G06Q 20/38, G06Q 20/40, G06Q 20/34, G06Q 20/12, G06Q 20/20

(54) **SECURE AND CONFIDENTIAL PAYMENT**

(71) Applicant: Giesecke+Devrient Mobile Security GmbH, 81677 München (DE)
(72) Inventor: Hess, Florian, 80636 München (DE); Suri, Lakshay, 08850 Gava, Barcelona (ES); Sunyer, Albert, 08028 Barcelona (ES); Garrido, Jose Antonio, 08820 El Prat de Llobregat, Barcelona (ES); Ranieri, Dario, 08027 Barcelona (ES); Matsoukis, Spyridon, 80335 München (DE)

(57) **Abstract**

The present invention is directed towards a method for secure and confidential payment between a user and a vendor which makes it possible that the user can accomplish transactions for payment of goods without providing any details regarding his or her identity to the vendor. Moreover, the present invention is directed towards a system for secure and confidential payment being arranged in accordance with the suggested method. Furthermore, a computer program product is suggested providing instructions for implementing the suggested method and operating the suggested system.

## Description

The present invention is directed towards a method for secure and confidential payment between a user and a vendor which makes it possible that the user can accomplish transactions for payment of goods without providing any details regarding his or her identity to the vendor. Moreover, the present invention is directed towards a system for secure and confidential payment being arranged in accordance with the suggested method. Furthermore, a computer program product is suggested providing instructions for implementing the suggested method and operating the suggested system.

US 6,553,108 B1 teaches a method for implementing fraud control features using a communication session in billing over a computer network between a user and a value-added service.

US 2003/018 587 A1 teaches a method for carrying out at least one verified remote electronic transaction between at least one user and at least one merchant over a network.

CN 107895260 A teaches a method for communicating with a bank along with an electronic equipment.

The prior art shows several ways for accomplishment of payment transactions in which the user provides detailed information regarding her or his identity such as a real world name along with credit card information. Commonly known systems involve online-payment in which the user creates an account using a public key and a private key. In a further step such a account is linked with a bank account and money is withdrawn from such a bank account and provided to the merchant.

Such accounts typically involve the provisioning of an e-mail address which serves as public key for an account. Consequently, upon payment the user provides his e-mail address and consequently, a high risk of receiving spam mails results. However, there is no advantage for the user in providing an e-mail address and consequently, such lack of confidentially can be circumvented.

Regarding commonly known payment transactions the problem results that the user has to provide at least payment details such as an account number or confidential information regarding the credit card. Necessary information may involve data such as a card validation code CVC or respectively, a card verification value CW. This goes along with the provisioning of the account number and the user is not aware of the further procedure regarding data storage and maintenance. Consequently, there is a high risk that the merchant will store such confidential information and use it without knowledge of the user. In case the vendor or the merchant is trustworthy there may still be a problem regarding third parties such as a hacker. As a result the confidential data may be stolen even in case the vendor is trustworthy.

In any case there is a high risk regarding fraudulent use of the data and the confidential information is out of the control of the user. This is a general problem regarding the disclosure of banking details which is not of advantage for the user.

Consequently, there is a problem that firstly confidential information is disclosed and secondly such payment method are not secure as third parties may steal the information and withdraw money in a fashion not being authorized by the user.

The underlying problem of the methods according to the prior art is that in case a customer performing a purchase information about a permanent bank account has to be shared and specific data such as the permanent card number or the CW along with the expiry date has to be disclosed.

Hence, it is an object of the present invention to provide a method for secure and confidential payment which does not only secure the payment transaction but can be accomplished with low technical effort under usage of an existing telecommunication infrastructure. Moreover, it is an objective of the present invention to provide a respective system along with a computer program product comprising instructions being arranged to implement the suggested method and operate the suggested system.

The object is solved by means of the independent claims. Further advantages are provided by dependent claims.

Accordingly, a method for secure and confidential payment between a user and a vendor platform is suggested comprising the steps of requesting a virtual payment card at a bank server thereby specifying at least one validity restriction by means of a user device, forwarding the request along with the at least one specified validity restriction to a back-end server, generating the virtual payment card as a function of the at least one validity restriction and transmitting the same to the user device via the bank server, and performing a transaction between the user device and a vendor server using the virtual payment card.

The suggested method is both secure and confidential as the user is not forced to provide any specific details regarding the identity or any banking information. As the permanent bank account of the user is not directly involved regarding communication with the vendor such information is hidden from the vendor and the user merely provides information regarding a temporary virtual payment card. Moreover, the suggested method can be operated involving only little technical effort as specific security mechanisms do not have to be installed as the provided information as such is not confidential. Confidential payment is hidden by the back-end server and consequently, the used information is not of interest regarding a third party.

Accordingly, the technical effect arises that the suggested method is secure, confidential, and straight forward as no specific hardware infrastructure is required. A telecommunication network can be involved and consequently, commonly known devices and servers are operated, which are adapted regarding the communication such that they implement the suggested method.

The user is typically represented by the user device meaning that whenever a user is involved typically a mobile phone or a bank terminal takes over respective technical aspects. The vendor platform is typically provided by a server, which does not mean that the user device directly communicates with such a server. A point of sale terminal may be communicatively coupled with the vendor server and consequently, the user can perform interactions using such a terminal, which then acts as user device.

In a preliminary step requesting a virtual payment card is accomplished, which suggests that the user initiates the suggested method and communicates with a bank server. The bank server as such is typically a different server regarding the back-end server and consequently, a barrier is implemented between the bank server and the back-end server. This provides the advantage that no confidential server is passed on from the back-end server to the vendor server.

The virtual payment card as such may be provided by means of respective data packets in a specified data format. The virtual payment card hence comprises control instructions and parameters describing features of a payment card. However, according to the present invention the disadvantages of a physical payment card are remedied and the virtual payment card can be established using a server. For securing such a virtual payment card specific cryptographic operations or security mechanisms can be implemented.

The virtual payment card provides data fields, which are similar to those of a physical payment card and consequently, compatibility is reached between an environment using a physical payment card or a virtual payment card.

Once the virtual payment card is requested such a request is forwarded to the back-end server, which receives the request along with specified validity restrictions. Such validity restrictions refer to the usage of the virtual payment card and specify the rights regarding the transactions. Consequently, not the permanent bank account is used but a restricted version thereof, which does not comprise the same data as the permanent bank account. In this way the virtual payment card is separated from the permanent bank account and consequently, no confidential information regarding the permanent bank account has to be provided.

The back-end server generates the virtual payment card and thereby implements the validity restrictions such that the virtual payment card has not the same rights as a physical payment card or the bank account as such.

Once the virtual payment card is generated it is transmitted to the user device via the bank server. Hence, the bank server is detached from the back-end server and it is made sure that no confidential information is directly exchanged between the back-end server and the vendor server.

Once the user device has received the virtual payment card it can be used for purchasing items and the transaction is performed between the user device and a vendor server. While the transaction as such is performed between the user device and a vendor server the user device may likewise communicate with the bank server and/or the back-end server. However, there is a barrier between confidential data and the vendor server such that only banking information regarding the virtual payment card has to be provided. The validity restrictions serve as security measure and consequently, no confidential information is provided unless the user configures respective rights.

According to an aspect of the present invention upon performing the transaction the vendor server directly communicates with the bank server to settle the transaction. This provides the advantage that the vendor server does not need to communicate with the back-end server as the back-end server holds confidential information regarding the permanent bank account and in general, the communication is restricted such that the vendor server merely reads the information which is provided by the bank server.

According to a further aspect of the present invention authentication is performed at least between the vendor server and the bank server. This provides the advantage that an additional security mechanism is implemented and the transaction which is typically accomplished between the vendor server and the bank server is secured. In this way it is made sure that the vendor server has indeed the identity which the bank server expects. Consequently, no third parties can redirect the transaction.

According to a further aspect of the present invention authentication is performed at least between the bank server and the back-end server. This provides the advantage that the communication flow between the vendor server and the back-end server is restricted and typically authentication is performed between the vendor server and the bank server on the one side and between the bank server and the back-end server on the other side. This provides the advantage that no direct communication between the vendor server and the back-end server is necessary. This makes the overall infrastructure robust against attacks.

According to a further aspect of the present invention the at least one validity restriction refers to a number of transactions, a value of transactions, a vendor identity, a vendor type, a vendor certificate, an internet address, an internet domain, a relative time interval, an absolute time interval, and/or a payment information. This provides the advantage that the user can control the usage of the virtual payment card and consequently, no direct access is provided to the permanent bank account. The user is provided with a variety of possibilities to restrict payments such as a one-time payment or a payment regarding a specific amount. Furthermore, the vendor can be specified by identity or type and moreover, the vendor may be required to provide a specific certificate indicating trustworthiness of the vendor. Moreover, technical information such as an internet address or domain can be specified and time limits can likewise be configured. Consequently, the virtual payment court may be valid for a relative number of hours or may expire at a specific date.

According to a further aspect of the present invention the at least one validity restriction specifies at least one natural person. This provides the advantage that the virtual payment card can be shared among family members or companies and consequently, not everyone is allowed to use the virtual payment card. In this way an easy way of sharing a virtual payment card is created and consequently, further persons are prevented from fraudulent usage.

According to a further aspect of the present invention the virtual payment card is linked with a bank account. This provides the advantage that the bank account as such may provide the money but is not directly accessed. Consequently, the transaction can be settled but information from the bank account does not need to be provided.

According to a further aspect of the present invention the virtual payment card comprises encrypted data. This provides the advantage that specific information such as the user identity may be hidden. Moreover, the virtual payment card can be encrypted before transmitting it over a network and consequently, the stored information is secured.

According to a further aspect of the present invention a bank account linked to the virtual payment card is checked regarding its validity before generating the virtual payment card. This provides the advantage that additional security mechanisms can be implemented and only valid bank accounts are used for creation of the virtual payment card. This provides security for the vendor.

According to a further aspect of the present invention the vendor registers for acceptance of the virtual payment card. This provides the advantage that a vendor profile is available which allows the virtual payment card to check the vendor type and evaluate trustworthiness of the vendor. Moreover, the vendor accepts to settle transactions using the virtual payment card.

According to a further aspect of the present invention the virtual payment card comprises at least a selection of data fields provided by a physical payment card. This provides the advantage that the virtual payment card is compatible with any infrastructure which is arranged to accept physical payment cards. The same procedures can be accomplished and consequently, no adaptions are necessary for using the virtual payment card. The virtual payment card can be provided and a point of sale will accept such a virtual payment card as it provides the same or similar data as a physical payment card.

According to a further aspect of the present invention performing the transaction between the user device and the vendor server involves a point-of-sale terminal. This provides the advantage that shops can operate point-of-sale terminals which are already installed and consequently, no specific adaptions are required. As a user device typically provides a wireless interface such point-of-sale terminals may receive the requested data over the air. The virtual card can be used at point-of-sale terminal using mobile payments or the virtual card can also be used to pay at web merchant by entering card details.
88431-7

According to a further aspect of the present invention the user device is provided by means of a mobile end device, a computer, and/or a bank terminal. This provides the advantage that any typical user device can be used and especially, such user devices can be used in parallel. For instance, a bank terminal may be used which communicates with a cell phone of the user.

The object is also solved by a system for secure and confidential payment between a user and a vendor platform, comprising a user device arranged to request a virtual payment card at a bank server thereby specifying at least one validity restriction, at least one network component arranged to forward the request along with the at least one specified validity restriction to a back-end server, the back-end server arranged to generate the virtual payment card as a function of the at least one validity restriction and transmitting the same to the user device via the bank server and an interface unit arranged to perform a transaction between the user device and a vendor server using the virtual payment card.

The object is also solved by a computer program product comprising instructions being able to implement the suggested method and operate the suggested system.

According to the present invention it is of advantage that the suggested method comprises method steps which can likewise be implemented using structural features of the suggested system. The suggested system provides structural features which provide functionality similar to those of the suggested method steps. Consequently, the suggested method is arranged to operate the suggested system and the system is arranged to perform the suggested method.

Further technical effects and advantages are demonstrated by usage of the accompanying figures, which show:
- Fig. 1:: a sequence diagram demonstrating a message flow being triggered by the suggested method for secure and confidential payment; and
- Fig. 2:: a flowchart diagram depicting the suggested method for secure and confidential payment according to a further aspect of the present invention.

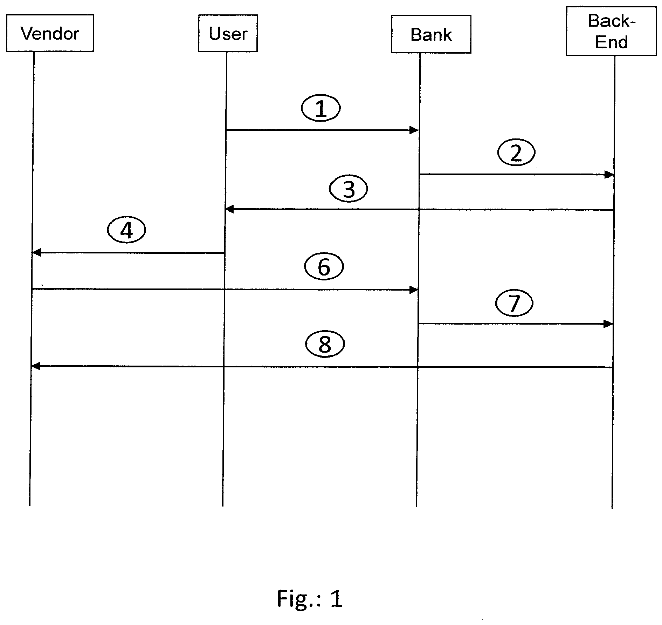

Fig. 1 shows on the left side the vendor server, then the user device, then the banking server and on the right side the back-end server. The message flow as indicated in Fig. 1 can be described considering the following aspects, which can be applied in their entireness or a selection thereof can be implemented.

The technical problem indicated in above step has been solved using the following means:
1. Customer requests virtual card (configurable based on different parameters - duration, transactions, balance, vendor) from the bank using the bank's mobile application.
2. Bank requests G+D's backend to generate the virtual card based on the configuration as requested by the end user.
3. G+D's backend sends these details to the bank and bank sends the details to customer.
4. Customer receives this virtual card details and enters these values on the online channel/ offline channel (from where purchase needs to be done).
5. Customer does not enter his permanent card details. Thus permanent bank details of the customer are not shared with the online/ offline purchase channel.
6. Upon pressing PAY button on online/ offline purchase channel, the website authenticates with the bank using the virtual card details.
7. Bank does the authentication with G+D's backend for the virtual card issued.
8. Based on the G+D's backend response and the Bank's internal verification, the purchase is successful or not.

The virtual card generated by the bank is configurable based on end user requirements and the card can be issued based on information regarding the transaction, an association with the specific vendor, a specific duration such as days, weeks, months, and so on, a maximum amount, and/or information enabling the user to share the virtual payment card with further users.

The suggested method differs from further techniques, such as a dynamic CVV solution as such cards have a battery, which lasts for a specific time and consequently, is inoperable later on. Moreover, such a physical card involves technical effort and moreover has to be manufactured. Using such a card the customer shares his bank account and respective information, which is not the case according to the present invention.

Considering online payment techniques according to the state of the art, such concepts are typically linked to a bank account and consequently, such direct linkage involves the disclosure of data. Again, confidential information has to be provided.

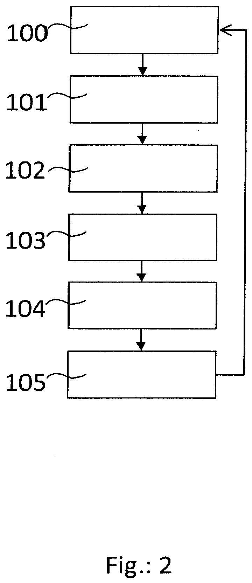

Fig. 2 shows a flowchart of the suggested method for secure and confidential payment between a user and a vendor platform, comprising the steps of requesting 100 a virtual payment card at a bank server thereby specifying 101 at least one validity restriction by means of a user device, forwarding 102 the request 100 along with the at least one specified 101 validity restriction to a back-end server, generating 103 the virtual payment card as a function of the at least one validity restriction and transmitting 104 the same to the user device via the bank server and performing 105 a transaction between the user device and a vendor server using the virtual payment card.

The person skilled in the art recognizes that the aforementioned method steps can be performed iteratively and/or may comprise additional substeps.

## Claims

1. A method for secure and confidential payment between a user and a vendor platform, comprising the steps:
- requesting (100) a virtual payment card at a bank server thereby specifying (101) at least one validity restriction by means of a user device;
- forwarding (102) the request (100) along with the at least one specified (101) validity restriction to a back-end server;
- generating (103) the virtual payment card as a function of the at least one validity restriction and transmitting (104) the same to the user device via the bank server; and
- performing (105) a transaction between the user device and a vendor server using the virtual payment card.

2. The method according to claim 1, **characterized in that** upon performing (105) the transaction the vendor server directly communicates with the bank server to settle the transaction.

3. The method according to claim 1 or 2, **characterized in that** authentication is performed at least between the vendor server and the bank server.

4. The method according to any one of the preceding claims, **characterized in that in that** authentication is performed at least between the bank server and the back-end server.

5. The method according to any one of the preceding claims, **characterized in that** the at least one validity restriction refers to a number of transactions, a value of transactions, a vendor identity, a vendor type, a vendor certificate, an internet address, an internet domain, a relative time interval, an absolute time interval and/ or a payment information.

6. The method according to any one of the preceding claims, **characterized in that** the at least one validity restriction specifies at least one natural person.

7. The method according to any one of the preceding claims, **characterized in that** the virtual payment card is linked with a bank account.

8. The method according to any one of the preceding claims, **characterized in that** the virtual payment card comprises encrypted data.

9. The method according to any one of the preceding claims, **characterized in that** a bank account linked to the virtual payment card is checked regarding its validity before generating (103) the virtual payment card.

10. The method according to any one of the preceding claims, **characterized in that** the vendor registers for acceptance of the virtual payment card.

11. The method according to any one of the preceding claims, **characterized in that** the virtual payment card comprises at least a selection of data fields provided by a physical payment card.

12. The method according to any one of the preceding claims, **characterized in that** performing (105) the transaction between the user device and the vendor server involves a point of sale terminal.

13. The method according to any one of the preceding claims, **characterized in that** the user device is provided by means of a mobile end device, a computer and/ or a bank terminal.

14. A system for secure and confidential payment between a user and a vendor platform, comprising:
- a user device arranged to request (100) a virtual payment card at a bank server thereby specifying (101) at least one validity restriction;
- at least one network component arranged to forward (102) the request (100) along with the at least one specified (101) validity restriction to a back-end server;
- the back-end server arranged to generate (103) the virtual payment card as a function of the at least one validity restriction and transmitting (104) the same to the user device via the bank server; and
- an interface unit arranged to perform (105) a transaction between the user device and a vendor server using the virtual payment card.

15. A computer program product being arranged to perform a method in accordance with any one of the preceding claims 1 to 13, when being executed on a computer.
